# EUROPÄISCHE PATENTANMELDUNG

(11) **EP 2 799 368 A1**
(43) Veröffentlichungstag der Anmeldung: **05.11.2014**
(21) Anmeldenummer: 13166534.1
(22) Anmeldetag: 03.05.2013
(51) Int. Cl.: B65D 88/10, B65D 88/32, B65D 88/54, B65D 88/66, B65D 90/08

(54) **Schüttgutbehälter und Batterie von solchen Behältern**

(71) Anmelder: Roth Werke GmbH, 35232 Dautphetal (DE)
(72) Erfinder:
(74) Vertreter: Rohmann, Michael

(57) **Zusammenfassung**

Schüttgutbehälter, insbesondere zur Aufnahme von biogenen Festbrennstoffen als Schüttgut (1), wobei ein unterer Behälterteil (2) mit Behälterboden (3) und Behälterseitenwänden (4) vorgesehen ist sowie eine auf den unteren Behälterteil (2) aufgesetzte und mit dem unteren Behälterteil (2) verbundene Behälterhaube (5). Zumindest in der unteren Hälfte des unteren Behälterteils (2) sind Schrägflächen (6) vorhanden, die nach unten hin zu einer Sammelfläche (7) für das Schüttgut (1) zusammenlaufen. Es ist eine Fördereinrichtung (8) für das Schüttgut (1) vorhanden, die eine Förderöffnung (9) des Behälters durchgreift und sich bis in den Bereich der Sammelfläche (7) bzw. bis zur Sammelfläche (7) erstreckt.

## Beschreibung

Die Erfindung betrifft einen Schüttgutbehälter, insbesondere zur Aufnahme von biogenen Festbrennstoffen als Schüttgut, wie Holzpellets oder dergleichen. - Biogene Festbrennstoffe werden aufgrund der positiven Energieeffizienz zunehmend interessanter, insbesondere auch für die Energieerzeugung bzw. Wärmeerzeugung in Wohngebäuden.

Aus der Praxis sind die eingangs genannten Schüttgutbehälter in verschiedenen Ausführungsformen bekannt. Diese bekannten Schüttgutbehälter weisen aber in der Regel eine Reihe von Nachteilen auf. Häufig handelt es sich um aufwendig zu fertigende voluminöse Behälter. Die funktionssichere und reproduzierbare Entnahme des Schüttgutes ist oftmals nicht gewährleistet. Das Schüttgut in Form von biogenen Festbrennstoffen muss im Übrigen ausreichend gegen Feuchtigkeit geschützt sein. Auch diesbezüglich weisen viele bekannte Schüttgutbehälter erhebliche Nachteile auf.

Demgegenüber liegt der Erfindung das technische Problem zugrunde, einen Schüttgutbehälter der eingangs genannten Art anzugeben, bei dem die vorstehend beschriebenen Nachteile effektiv vermieden werden können.

Zur Lösung dieses technischen Problems lehrt die Erfindung einen Schüttgutbehälter, insbesondere zur Aufnahme von biogenen Festbrennstoffen als Schüttgut, wie Holzpellets oder dergleichen, wobei ein unterer Behälterteil mit Behälterboden und Behälterseitenwänden vorgesehen ist sowie eine auf den unteren Behälterteil aufgesetzte und mit dem unteren Behälterteil verbundene Behälterhaube, wobei zumindest in der unteren Hälfte des unteren Behälterteils nach unten geneigte Schrägflächen vorhanden sind, die nach unten hin zu einer Sammelfläche für das Schüttgut zusammenlaufen und wobei eine Fördereinrichtung für das Schüttgut vorhanden ist, die eine Förderöffnung des Behälters durchgreift und sich bis in den Bereich der Sammelfläche bzw. bis zur Sammelfläche erstreckt. - Die Bezeichnung "untere Hälfte" und "nach unten hin" beziehen sich auf den aufgestellten Betriebszustand des erfindungsgemäßen Schüttgutbehälters.

Biogene Festbrennstoffe meinen im Rahmen der Erfindung feste Brennstoffe biologisch-organischer Herkunft. Als biogene Festbrennstoffe bzw. als biogenes Schüttgut können im Rahmen der Erfindung insbesondere Holzpellets, Holzschnitzel, Strohpellets, Nussschalen, Olivenkerne oder dergleichen eingesetzt werden. Derartige biogene Festbrennstoffe zeichnen sich durch eine sehr effektive Energieerzeugung aus, wobei diese Energieerzeugung kostengünstiger als beispielsweise Heizöl in Bezug auf die gleiche Energiemenge ist.

Der erfindungsgemäße Schüttgutbehälter eignet sich zur Lagerung von Schüttgut sowohl im Freien als auch in Wohnhäusern oder dergleichen. - Es liegt im Rahmen der Erfindung, dass der erfindungsgemäße Schüttgutbehälter im Querschnitt bzw. im horizontalen Querschnitt rechteckig ausgebildet ist. Dann weist der erfindungsgemäße Schüttgutbehälter vier Behälterseitenwände und einen Behälterboden auf. Es liegt weiterhin im Rahmen der Erfindung, dass die Ecken des im Querschnitt rechteckigen Behälters abgerundet sind. - Erfindungsgemäß laufen die Schrägflächen im unteren Behälterteil zu einer Sammelfläche zusammen. Zweckmäßigerweise ist die Sammelfläche horizontal bzw. im Wesentlichen horizontal orientiert. Es ist aber nicht zwingend erforderlich, dass die Sammelfläche als größere horizontale Fläche ausgebildet ist. Grundsätzlich können die Schrägflächen im unteren Behälterteil auch spitz zusammenlaufen und dann wird die dadurch gebildete Spitze als Sammelfläche im Rahmen der Erfindung aufgefasst. Sinn und Zweck der Schrägflächen ist es, dass das Schüttgut sich immer am tiefsten Punkt des Behälters bzw. am tiefsten Punkt des Aufnahmevolumens des Behälters sammelt.

Nachfolgend werden einige bevorzugte Ausführungsformen des erfindungsgemäßen Schüttgutbehälters bezüglich seiner Abmessungen angegeben. Zweckmäßigerweise beträgt die Länge I des Schüttgutbehälters 90 bis 280 cm und bevorzugt 100 bis 260 cm. Vorzugsweise beträgt die Breite des Behälters 50 bis 100 cm und empfohlenermaßen 60 bis 95 cm. Es liegt dabei im Rahmen der Erfindung, dass die Länge größer bzw. deutlich größer ist als die Breite des erfindungsgemäßen Schüttgutbehälters. Es hat sich bewährt, dass die Höhe des Schüttgutbehälters 100 bis 200 cm und bevorzugt 120 bis 190 cm beträgt. Vorzugsweise hat der erfindungsgemäße Schüttgutbehälter eine Aufnahmekapazität für Schüttgut von 500 bis 3500 l und empfohlenermaßen von 550 bis 3200 l.

Es liegt im Rahmen der Erfindung, dass der untere Behälterteil und die Behälterhaube aus Kunststoff bzw. im Wesentlichen aus Kunststoff bestehen. Eine besonders bevorzugte Ausführungsform der Erfindung ist dadurch gekennzeichnet, dass der untere Behälterteil und die Behälterhaube aus einem Polyolefin bzw. im Wesentlichen aus einem Polyolefin bestehen und bevorzugt aus Polyethylen bzw. im Wesentlichen aus Polyethylen bestehen. Es empfiehlt sich, dass der untere Behälterteil und die Behälterhaube aus HDPE (High Density Polyethylene) bestehen bzw. im Wesentlichen aus HDPE bestehen. - Eine sehr bevorzugte Ausführungsform der Erfindung ist dadurch gekennzeichnet, dass der untere Behälterteil und die Behälterhaube als Blasformteile ausgebildet sind. Der untere Behälterteil und die Behälterhaube werden gemäß dieser Ausführungsform durch Blasformen hergestellt.

Gemäß bevorzugter Ausführungsform der Erfindung sind der untere Behälterteil und die Behälterhaube über eine Rastverbindung miteinander verbunden. Empfohlenermaßen weist die Behälterhaube einen Übergriffsabschnitt auf, der einen Randabschnitt am oberen Rand des unteren Behälterteils übergreift und der Übergriffsabschnitt und der Randabschnitt sind über die Rastverbindung miteinander verbunden. Zweckmäßigerweise ist die beispielsweise eine Förderschnecke aufweisende Fördereinrichtung durch eine Öffnung in der Behälterhaube aus dem Schüttgutbehälter herausgeführt. Besonders bevorzugt ist die Fördereinrichtung durch die Öffnung in der Behälterhaube geführt, wenn der Schüttgutbehälter ein Fassungsvolumen von weniger als 1000 Liter, beispielsweise von 500 Litern oder 750 Litern, aufweist. Gemäß einer Ausführungsform ist die Fördereinrichtung durch eine Öffnung in dem unteren Behälterteil aus dem Schüttgutbehälter geführt. Zweckmäßigerweise ist die Fördereinrichtung durch die Öffnung in dem unteren Behälterteil geführt, wenn der Schüttgutbehälter ein Volumen von zumindest 1000 Litern, beispielsweise von 1500 Litern oder 3000 Litern, aufweist. Es empfiehlt sich, dass eine Steigung einer durch die Öffnung in dem unteren Behälterteil geführten Fördereinrichtung geringer ist als eine Steigung der durch die Öffnung in der Behälterhaube geführten Fördereinrichtung.

Es liegt im Rahmen der Erfindung, dass die Schrägflächen Bestandteil einer separaten Behälterwanne sind, die über dem Behälterboden und zwischen den Behälterseitenwänden des erfindungsgemäßen Schüttgutbehälters angeordnet ist. Bei dieser Ausführungsform sind die Schrägflächen also Bestandteil eines separaten Bauteils. Vorzugsweise ist die Behälterwanne mit den Schrägflächen durch die obere Öffnung des Behälterunterteils in den Schüttgutbehälter einführbar bzw. einlegbar. Es liegt weiterhin im Rahmen der Erfindung, dass die Sammelfläche Bestandteil der Behälterwanne ist. Es liegt fernerhin im Rahmen der Erfindung, dass die Sammelfläche am tiefsten Punkt der Behälterwanne angeordnet ist. Vorzugsweise ist die Sammelfläche parallel bzw. im Wesentlichen parallel zum Behälterboden orientiert.

Es empfiehlt sich, dass zumindest drei Schrägflächen, vorzugsweise vier Schrägflächen vorgesehen sind. Vorzugsweise hat eine Schrägfläche die Form eines Dreiecks und bevorzugt die Form eines Dreiecks mit abgerundeten bzw. abgeschnittenen Ecken. Es liegt im Rahmen der Erfindung, dass die Schrägflächen bzw. die Behälterwanne die Form einer umgekehrten Pyramide bzw. in etwa die Form einer umgekehrten Pyramide aufweisen und insbesondere die Form eines umgekehrten Pyramidenstumpfes mit der Sammelfläche an der Spitze des Pyramidenstumpfes aufweisen. Zweckmäßigerweise ist die Sammelfläche rechteckförmig ausgebildet und insbesondere dann rechteckförmig ausgebildet, wenn nach besonders bevorzugter Ausführungsform der Erfindung vier Schrägflächen vorgesehen sind.

Vorzugsweise beträgt der Neigungswinkel α zwischen einer Schrägfläche bzw. zwischen den Schrägflächen und dem Behälterboden 30° bis 60° und bevorzugt 35° bis 50°. - Nach sehr bevorzugter Ausführungsform der Erfindung bestehen die Schrägflächen bzw. besteht die Behälterwanne aus Metall bzw. im Wesentlichen aus Metall und bevorzugt aus Stahl bzw. im Wesentlichen aus Stahl. Diese Ausführungsform hat sich im Rahmen der Erfindung besonders bewährt. Grundsätzlich können die Schrägflächen bzw. kann die Behälterwanne aber auch aus einem Kunststoff bestehen.

Eine sehr bevorzugte Ausführungsform der Erfindung ist dadurch gekennzeichnet, dass zwischen dem Behälterboden und den Schrägflächen bzw. zwischen dem Behälterboden und der Behälterwanne eine Vibratoreinrichtung bzw. Rüttlereinrichtung angeordnet ist. Es liegt dabei im Rahmen der Erfindung, dass die Vibratoreinrichtung unter der Sammelfläche positioniert ist und bevorzugt Kontakt mit der Sammelfläche hat. Zweckmäßigerweise wird die Vibratoreinrichtung beim Einschalten der Fördereinrichtung aktiviert. Bei Aktivierung der Vibratoreinrichtung wird sichergestellt, dass insbesondere im Zuge des Förderns des Schüttgutes mit der Fördereinrichtung Schüttgut immer am tiefsten Punkt des Behälters bzw. auf der Sammelfläche des Behälters bzw. der Behälterwanne vorhanden ist. Mit anderen Worten wird sichergestellt, dass das Schüttgut immer zum tiefsten Punkt bzw. zu der Sammelfläche nachrutscht, so dass eine effektive Förderung des Schüttgutes möglich ist.

Empfohlenermaßen weist die Fördereinrichtung ein Förderrohr sowie eine in dem Förderrohr aufgenommene Förderschnecke auf. Es liegt im Rahmen der Erfindung, dass das Förderrohr mit der darin aufgenommenen Förderschnecke die Förderöffnung des Behälters durchgreift. Zweckmäßigerweise ist an der Förderöffnung des Behälters ein Durchführungsstutzen für das Förderrohr vorgesehen. Gemäß besonders bevorzugter Ausführungsform der Erfindung ist die Förderöffnung bzw. ist der Durchführungsstutzen in einer Behälterseitenwand vorgesehen. Es liegt im Rahmen der Erfindung, dass die Fördereinrichtung elektronisch gesteuert und/oder geregelt wird. Fernerhin liegt es im Rahmen der Erfindung, dass die Fördereinrichtung mittels eines Motors angetrieben wird.

Vorzugsweise ist in der Behälterhaube ein Mannloch vorgesehen. Ein solches Mannloch erlaubt einer Person bzw. Bedienungsperson den Zugang zum Innenraum des Schüttgutbehälters. Es liegt im Rahmen der Erfindung, dass ein geeigneter Deckel zum Verschließen des Mannloches vorgesehen ist. Über das vorzugsweise vorgesehene Mannloch ist zum einen eine manuelle Befüllung des Behälters mit Schüttgut möglich. Zum anderen gewährleistet dieses bevorzugt vorgesehene Mannloch einen einfachen Zugang zum Innenraum des Behälters zwecks Reinigung, Reparatur und Wartung. - Es liegt im Rahmen der Erfindung, dass der Schüttgutbehälter zumindest eine Befüllöffnung zum Befüllen und bevorzugt zum automatischen Befüllen bzw. Beladen des Behälters aufweist. Insoweit kann an der Befüllöffnung ein Anschlussstutzen für die Befüllung mit einer Zuförderleitung vorgesehen sein. Es liegt im Rahmen der Erfindung, dass ein automatisches Befüllen bzw. Beladen des Behälters insbesondere aus einem Tanklastwagen möglich ist. Gemäß einer Ausführungsvariante weist der erfindungsgemäße Schüttgutbehälter eine Staubabzugsöffnung auf, aus der beim Befüllen bzw. Beladen des Behälters entstehender Staub abgezogen werden kann, insbesondere in einen Staubbeutel bzw. Staubsack abgezogen werden kann.

Gegenstand der Erfindung ist auch eine Behälterbatterie bzw. Schüttgutbehälterbatterie, zu deren Realisierung mehrere der erfindungsgemäßen Schüttgutbehälter in Reihe geschaltet sind. Zweckmäßigerweise werden die Schüttgutbehälter durch Fördereinrichtungen bzw. durch Zuführleitungen für das Schüttgut miteinander verbunden.

Der Erfindung liegt die Erkenntnis zugrunde, dass der erfindungsgemäße Schüttgutbehälter eine funktionssichere effektive und reproduzierbare Entnahme des Schüttgutes mittels einer Fördereinrichtung gewährleistet. Der erfindungsgemäße Schüttgutbehälter ist weiterhin auf einfache und wenig aufwendige Weise und somit kostengünstige Weise herstellbar. Er ist problemlos in Innenräumen von Gebäuden transportierbar. Sowohl die Beladung mit Schüttgut als auch die Entnahme von Schüttgut ist einfach und ohne Probleme möglich. Der erfindungsgemäße Schüttgutbehälter zeichnet sich insbesondere auch durch ein relativ geringes Gewicht sowie durch eine optimale Eigenstabilität aus. Mehrere erfindungsgemäße Schüttgutbehälter sind problemlos zu einer Behälterbatterie kombinierbar.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht eines erfindungsgemäßen Schüttgutbehälters,
- Fig. 2: eine Seitenansicht des Gegenstandes nach Fig. 1 im Schnitt,
- Fig. 3: eine Frontansicht des Gegenstandes gemäß Fig. 2 aus Richtung des Pfeils A teilweise aufgebrochen,
- Fig. 4: den Gegenstand nach Fig. 2 in einer anderen Ausführungsform,
- Fig. 5: eine perspektivische Draufsicht auf den unteren Behälterteil des Schüttgutbehälters gemäß Fig. 4,
- Fig. 6: den Ausschnitt B aus der Fig. 2 in vergrößerter Darstellung und
- Fig. 7: eine Behälterbatterie mit mehreren in Reihe geschalteten erfindungsgemäßen Schüttgutbehältern.

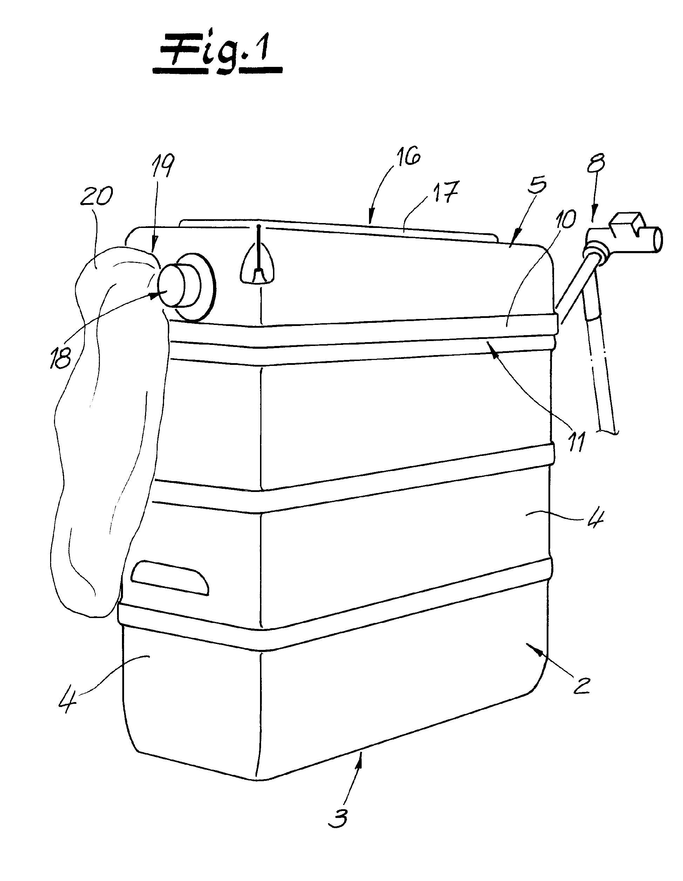

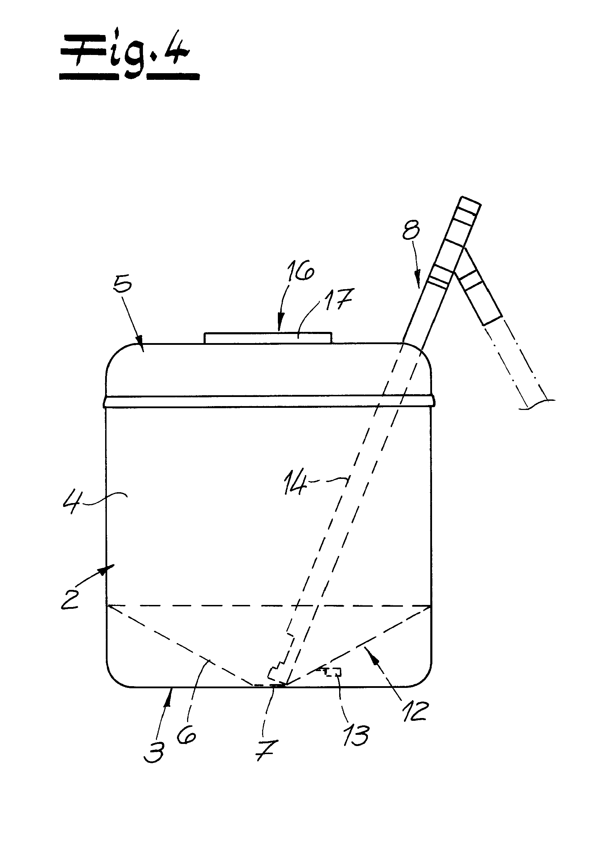

Die Fig. 1 bis 6 zeigen einen erfindungsgemäßen Schüttgutbehälter zur Aufnahme von biogenen Festbrennstoffen als Schüttgut 1. Gemäß einer Ausführungsform handelt es sich bei dem Schüttgut 1 um Holzpellets. Der erfindungsgemäße Schüttgutbehälter weist einen unteren Behälterteil 2 mit Behälterboden 3 und Behälterseitenwänden 4 auf sowie eine auf dem unteren Behälterteil 2 aufgesetzte und mit dem unteren Behälterteil 2 verbundene Behälterhaube 5. Nach bevorzugter Ausführungsform der Erfindung bestehen der untere Behälterteil 2 und die Behälterhaube 5 aus Kunststoff, und zwar vorzugsweise aus Polyethylen und besonders bevorzugt aus HDPE. Zweckmäßigerweise sind der untere Behälterteil 2 und die Behälterhaube 5 als Blasformteile ausgebildet. Beide Behälterkomponenten werden also empfohlenermaßen durch Blasformen hergestellt.

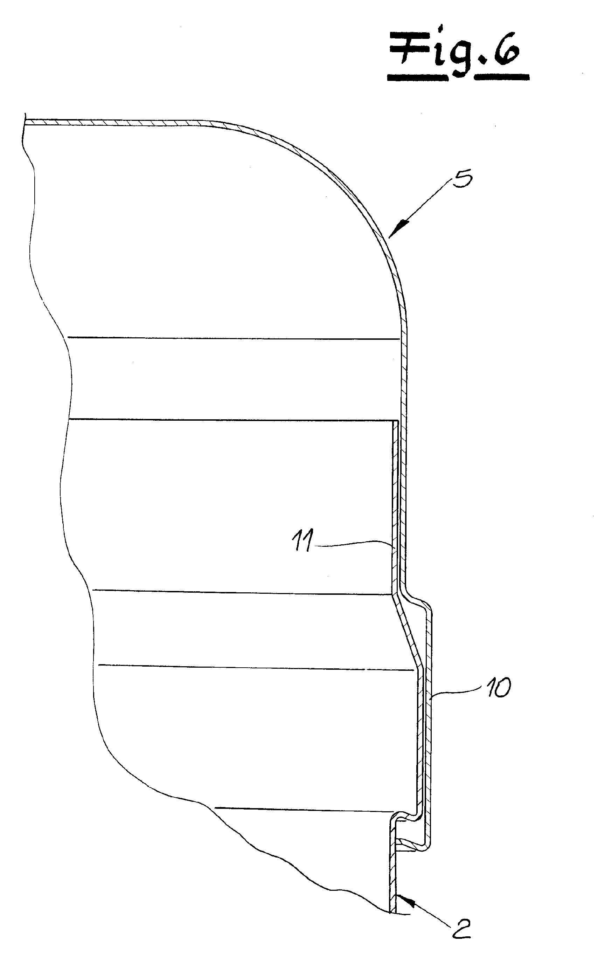

Gemäß bevorzugter Ausführungsform und im Ausführungsbeispiel sind der untere Behälterteil 2 und die Behälterhaube 5 über eine Rastverbindung miteinander verbunden (Fig. 6). Empfohlenermaßen und im Ausführungsbeispiel weist dazu die Behälterhaube 5 einen Übergriffsabschnitt 10 auf, der einen Randabschnitt 11 am oberen Rand des unteren Behälterteils 2 übergreift. Zweckmäßigerweise und im Ausführungsbeispiel sind der Übergriffsabschnitt 10 und der Randabschnitt 11 über die Rastverbindung miteinander verbunden.

Bevorzugt und im Ausführungsbeispiel ist der Schüttgutbehälter bzw. der untere Behälterteil 2 und die Behälterhaube 5 im Querschnitt rechteckig ausgebildet. Somit weist der untere Behälterteil 2 zweckmäßigerweise und im Ausführungsbeispiel vier Behälterseitenwände 4 auf. Empfohlenermaßen und im Ausführungsbeispiel ist der gesamte Schüttgutbehälter quaderförmig ausgebildet und zwar bevorzugt und im Ausführungsbeispiel mit abgerundeten Ecken (siehe insbesondere Fig. 1).

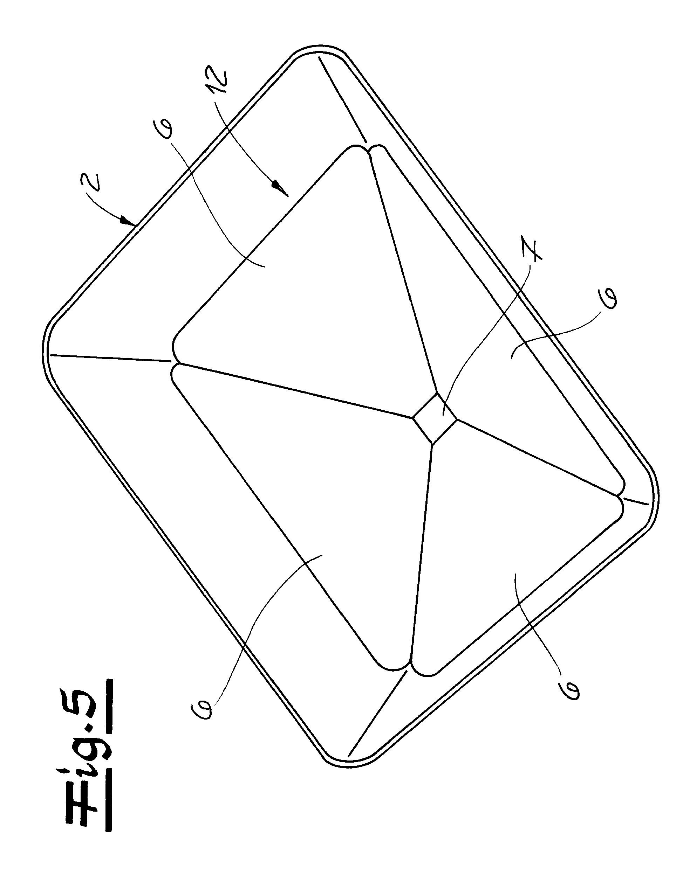

Erfindungsgemäß sind zumindest in der unteren Hälfte des unteren Behälterteils 2 nach unten geneigte Schrägflächen 6 vorhanden, die nach unten hin zu einer Sammelfläche 7 für das Schüttgut 1 zusammenlaufen. Es liegt im Rahmen der Erfindung, dass sich die Sammelfläche 7 am tiefsten Punkt der Schrägflächen 6 befindet. Nach besonders bevorzugter Ausführungsform und im Ausführungsbeispiel sind die Schrägflächen 6 Bestandteil einer separaten Behälterwanne 12, die über dem Behälterboden 3 und zwischen den Behälterseitenwänden 4 angeordnet ist. Es liegt im Rahmen der Erfindung, dass diese Behälterwanne durch die obere Öffnung des unteren Behälterteils 2 in den Schüttgutbehälter eingeführt wird. Bevorzugt und im Ausführungsbeispiel ist die Sammelfläche 7 Bestandteil der Behälterwanne 12. Empfohlenermaßen und im Ausführungsbeispiel ist die Sammelfläche 7 parallel zum Behälterboden 3 angeordnet. Sie bildet im Ausführungsbeispiel den tiefsten Punkt der Behälterwanne 12, so dass stets Schüttgut auf der Sammelfläche 7 vorhanden ist. Nach bevorzugter Ausführungsform und im Ausführungsbeispiel weist die Behälterwanne 12 vier Schrägflächen 6 auf, die vorzugsweise und im Ausführungsbeispiel dreieckförmig ausgebildet sind (Fig. 5). Die Dreiecke weisen dabei im Bereich der Behälterseitenwände 4 abgerundete Ecken auf und zur Sammelfläche 7 hin eine gleichsam abgeschnittene Ecke auf. Bevorzugt und im Ausführungsbeispiel bilden die vier Schrägflächen 6 einen umgekehrten Pyramidenstumpf mit der Sammelfläche 7 an der Spitze des Pyramidenstumpfes. Die Sammelfläche 7 ist bevorzugt und im Ausführungsbeispiel rechteckförmig ausgebildet. Zweckmäßigerweise und im Ausführungsbeispiel bestehen die Schrägflächen 6 bzw. besteht die Behälterwanne 12 aus Metall und bevorzugt aus Stahlblech. Der Neigungswinkel α zwischen einer Schrägfläche 6 und dem Behälterboden 3 beträgt vorzugsweise 35° bis 50°.

Erfindungsgemäß ist eine Fördereinrichtung 8 für das Schüttgut 1 vorhanden, die eine Förderöffnung 9 des Behälters durchgreift und sich bis in den Bereich der Sammelfläche 7 bzw. bis zur Sammelfläche 7 erstreckt (siehe insbesondere Fig. 1, 2 und 4). Vorzugsweise und im Ausführungsbeispiel weist die Fördereinrichtung 8 ein Förderrohr 14 sowie eine in dem Förderrohr 14 aufgenommene Förderschnecke 15 auf. Die Förderschnecke 15 wird bevorzugt durch eine nicht näher dargestellten Motor angetrieben und auf diese Weise kann das Schüttgut 1 von der Sammelfläche 7 bzw. aus dem Behälter gefördert werden. Empfohlenermaßen und im Ausführungsbeispiel ist zwischen dem Behälterboden 3 und den Schrägflächen 6 bzw. der Behälterwanne 12 eine Vibratoreinrichtung bzw. Rüttlereinrichtung angeordnet. Zweckmäßigerweise und im Ausführungsbeispiel hat die Vibratoreinrichtung 13 Kontakt zu der Behälterwanne 12. Bei Aktivierung der Vibratoreinrichtung 13 wird sichergestellt, dass stets Schüttgut 1 zur Sammelfläche 7 und somit zum tiefsten Punkt der Behälterwanne 12 nachrutscht. Dadurch ist eine effektive Förderung des Schüttgutes 1 mittels der Fördereinrichtung 8 sichergestellt.

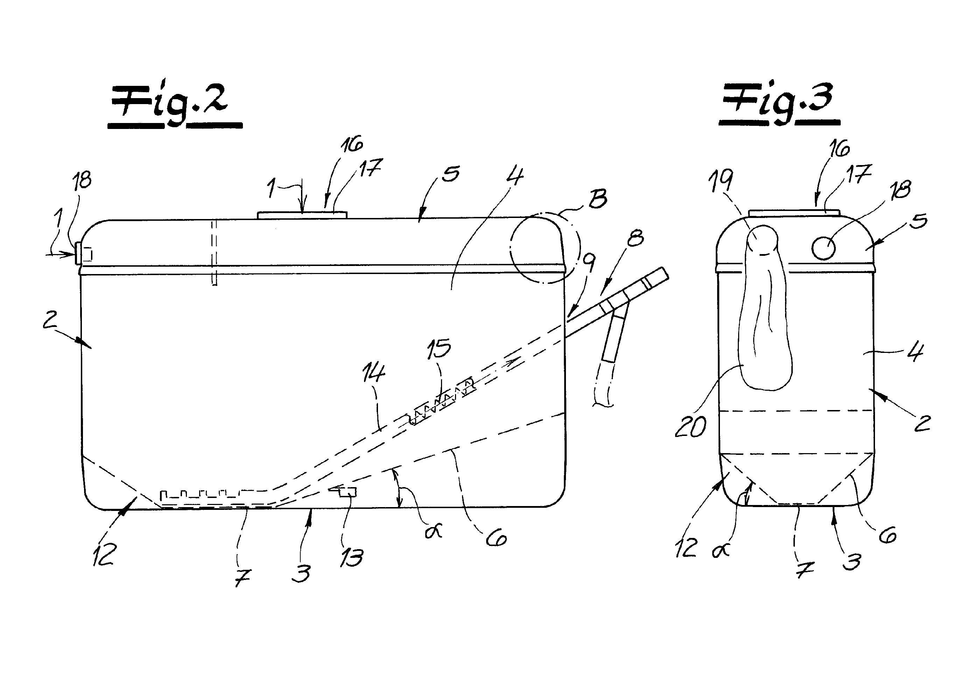

Vorzugsweise und im Ausführungsbeispiel ist in der Oberseite der Behälterhaube 5 ein Mannloch 16 vorgesehen, das mit einem Deckel 17 verschlossen wird (siehe insbesondere Fig. 2, 3 und 4). Über dieses Mannloch 16 ist zum einen eine manuelle Befüllung des erfindungsgemäßen Schüttgutbehälters mit Schüttgut 1 möglich. Zum anderen ermöglicht dieses Mannloch 16 einen einfachen Zugang zum Innenraum des Behälters zwecks Reinigung, Wartung oder Reparatur. - Bevorzugt weist der erfindungsgemäße Schüttgutbehälter fernerhin eine Befüllöffnung 18 (siehe insbesondere Fig. 3) zur automatischen Befüllung mit Schüttgut 1 auf. An diese Befüllöffnung 18 kann beispielsweise eine Befüllzuleitung eines Tanklastwagens für Schüttgut 1 angeschlossen werden. - Empfohlenermaßen und im Ausführungsbeispiel weist der Schüttgutbehälter fernerhin eine Staubauslassöffnung 19 auf, sowie einen daran angeschlossenen Staubbeutel 20 (Fig. 1 und 3). In dem Staubbeutel 20 wird beim Befüllen des Behälters entstehender Staub aufgefangen bzw. gesammelt.

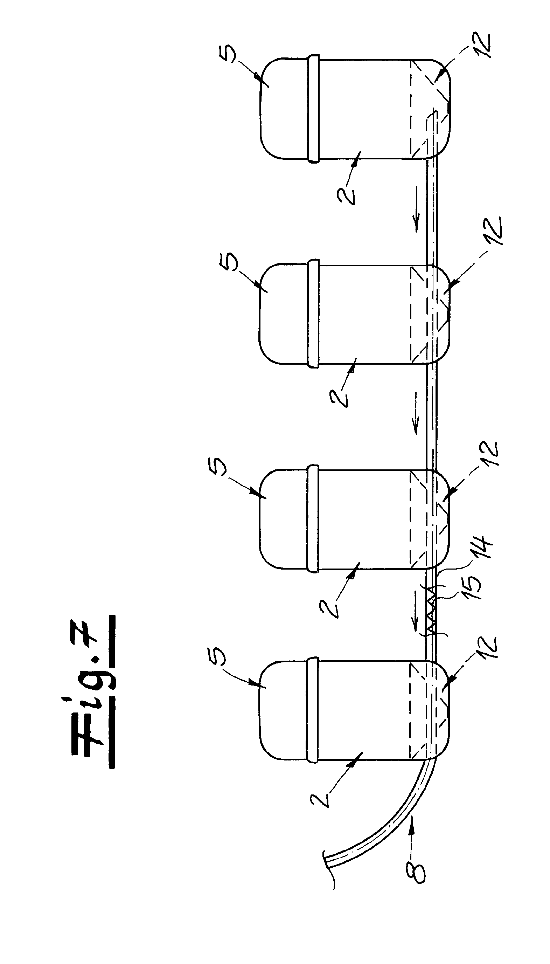

In der Fig. 7 ist eine Behälterbatterie von mehreren in Reihe geschalteten erfindungsgemäßen Schüttgutbehältern dargestellt. Diese Schüttgutbehälter werden durch eine gemeinsame Fördereinrichtung 8 miteinander verbunden.

## Patentansprüche

1. Schüttgutbehälter, insbesondere zur Aufnahme von biogenen Festbrennstoffen als Schüttgut (1) wie Holzpellets oder dergleichen, wobei ein unterer Behälterteil (2) mit Behälterboden (3) und Behälterseitenwänden (4) vorgesehen ist sowie eine auf den unteren Behälterteil (2) aufgesetzte und mit dem unteren Behälterteil (2) verbundene Behälterhaube (5), wobei zumindest in der unteren Hälfte des unteren Behälterteils (2) Schrägflächen (6) vorhanden sind, die nach unten hin zu seiner Sammelfläche (7) für das Schüttgut (1) zusammenlaufen und wobei eine Fördereinrichtung (8) für das Schüttgut (1) vorhanden ist, die eine Förderöffnung (9) des Behälters durchgreift und sich bis in den Bereich der Sammelfläche (7) bzw. bis zur Sammelfläche (7) erstreckt.

2. Schüttgutbehälter nach Anspruch 1, wobei der untere Behälterteil (2) und die Behälterhaube (5) aus Kunststoff bzw. im Wesentlichen aus Kunststoff bestehen.

3. Schüttgutbehälter nach Anspruch 2, wobei der untere Behälterteil (2) und die Behälterhaube (5) aus einem Polyolefin bzw. im Wesentlichen aus einem Polyolefin bestehen und bevorzugt aus Polyethylen bzw. im Wesentlichen aus Polyethylen bestehen.

4. Schüttgutbehälter nach einem der Ansprüche 2 oder 3, wobei der untere Behälterteil (2) und die Behälterhaube (5) als Blasformteile ausgebildet sind.

5. Schüttgutbehälter nach einem der Ansprüche 1 bis 4, wobei der untere Behälterteil (2) und die Behälterhaube (5) über eine Rastverbindung miteinander verbunden sind.

6. Schüttgutbehälter nach Anspruch 5, wobei die Behälterhaube (5) einen Übergriffsabschnitt (10) aufweist, der einen Randabschnitt (11) am oberen Rand des unteren Behälterteils (2) übergreift und wobei der Übergriffsabschnitt (10) und der Randabschnitt (11) über eine Rastverbindung miteinander verbunden sind.

7. Schüttgutbehälter nach einem der Ansprüche 1 bis 6, wobei die Schrägflächen (6) Bestandteil einer Behälterwanne (12) sind, die über dem Behälterboden (3) und zwischen den Behälterseitenwänden (4) angeordnet ist.

8. Schüttgutbehälter nach Anspruch 7, wobei die Sammelfläche (7) Bestandteil der Behälterwanne (12) ist.

9. Schüttgutbehälter nach einem der Ansprüche 1 bis 8, wobei zumindest drei Schrägflächen (6), vorzugsweise vier Schrägflächen (6), vorgesehen sind.

10. Schüttgutbehälter nach einem der Ansprüche 1 bis 9, wobei der Neigungswinkel α zwischen einer Schrägfläche (6) und dem Behälterboden (3) 30° bis 60° und bevorzugt 35° bis 50° beträgt.

11. Schüttgutbehälter nach einem der Ansprüche 1 bis 10, wobei die Schrägflächen (6) bzw. die Behälterwanne (12) aus Metall bzw. im Wesentlichen aus Metall und bevorzugt aus Stahl bzw. im Wesentlichen aus Stahl besteht.

12. Schüttgutbehälter nach einem der Ansprüche 1 bis 11, wobei zwischen dem Behälterboden (3) und den Schrägflächen (6) bzw. dem Behälterboden (3) und der Behälterwanne (12) eine Vibratoreinrichtung (13) angeordnet ist.

13. Schüttgutbehälter nach einem der Ansprüche 1 bis 12, wobei die Fördereinrichtung (8) ein Förderrohr (14) sowie eine in dem Förderrohr (14) aufgenommene Förderschnecke (15) aufweist.

14. Schüttgutbehälter nach einem der Ansprüche 1 bis 13, wobei in der Behälterhaube (5) ein Mannloch (16) vorgesehen ist.

15. Behälterbatterie, wobei mehrere der Schüttgutbehälter nach einem der Ansprüche 1 bis 14 in Reihe geschaltet sind.

## Geänderte Patentansprüche

### Geänderte Patentansprüche gemäss Regel 137(2) EPÜ.

**1.** Schüttgutbehälter, insbesondere zur Aufnahme von biogenen Festbrennstoffen als Schüttgut (1) wie Holzpellets oder dergleichen, wobei ein unterer Behälterteil (2) mit Behälterboden (3) und Behälterseitenwänden (4) vorgesehen ist sowie eine auf den unteren Behälterteil (2) aufgesetzte und mit dem unteren Behälterteil (2) verbundene Behälterhaube (5), wobei zumindest in der unteren Hälfte des unteren Behälterteils (2) nach unten geneigte Schrägflächen (6) vorhanden sind, die nach unten hin zu einer Sammelfläche (7) für das Schüttgut (1) zusammenlaufen, wobei die Schrägflächen (6) Bestandteil einer Behälterwanne (12) sind, die über dem Behälterboden (3) und zwischen den Behälterseitenwänden (4) angeordnet ist und wobei eine Fördereinrichtung (8) für das Schüttgut (1) vorhanden ist, die eine Förderöffnung (9) des Behälters durchgreift und sich bis in den Bereich der Sammelfläche (7) bzw. bis zur Sammelfläche (7) erstreckt.

**2.** Schüttgutbehälter nach Anspruch 1, wobei der untere Behälterteil (2) und die Behälterhaube (5) aus Kunststoff bzw. im Wesentlichen aus Kunststoff bestehen.

**3.** Schüttgutbehälter nach Anspruch 2, wobei der untere Behälterteil (2) und die Behälterhaube (5) aus einem Polyolefin bzw. im Wesentlichen aus einem Polyolefin bestehen und bevorzugt aus Polyethylen bzw. im Wesentlichen aus Polyethylen bestehen.

**4.** Schüttgutbehälter nach einem der Ansprüche 2 oder 3, wobei der untere Behälterteil (2) und die Behälterhaube (5) als Blasformteile ausgebildet sind.

**5.** Schüttgutbehälter nach einem der Ansprüche 1 bis 4, wobei der untere Behälterteil (2) und die Behälterhaube (5) über eine Rastverbindung miteinander verbunden sind.

**6.** Schüttgutbehälter nach Anspruch 5, wobei die Behälterhaube (5) einen Übergriffsabschnitt (10) aufweist, der einen Randabschnitt (11) am oberen Rand des unteren Behälterteils (2) übergreift und wobei der Übergriffsabschnitt (10) und der Randabschnitt (11) über eine Rastverbindung miteinander verbunden sind.

**7.** Schüttgutbehälter nach einem der Ansprüche 1 bis 6, wobei die Sammelfläche (7) Bestandteil der Behälterwanne (12) ist.

**8.** Schüttgutbehälter nach einem der Ansprüche 1 bis 7, wobei zumindest drei Schrägflächen (6), vorzugsweise vier Schrägflächen (6), vorgesehen sind.

**9.** Schüttgutbehälter nach einem der Ansprüche 1 bis 8, wobei der Neigungswinkel α zwischen einer Schrägfläche (6) und dem Behälterboden (3) 30° bis 60° und bevorzugt 35° bis 50° beträgt.

**10.** Schüttgutbehälter nach einem der Ansprüche 1 bis 9, wobei die Schrägflächen (6) bzw. die Behälterwanne (12) aus Metall bzw. im Wesentlichen aus Metall und bevorzugt aus Stahl bzw. im Wesentlichen aus Stahl besteht.

**11.** Schüttgutbehälter nach einem der Ansprüche 1 bis 10, wobei zwischen dem Behälterboden (3) und den Schrägflächen (6) bzw. dem Behälterboden (3) und der Behälterwanne (12) eine Vibratoreinrichtung (13) angeordnet ist.

**12.** Schüttgutbehälter nach einem der Ansprüche 1 bis 11, wobei die Fördereinrichtung (8) ein Förderrohr (14) sowie eine in dem Förderrohr (14) aufgenommene Förderschnecke (15) aufweist.

**13.** Schüttgutbehälter nach einem der Ansprüche 1 bis 12, wobei in der Behälterhaube (5) ein Mannloch (16) vorgesehen ist.

**14.** Behälterbatterie, wobei mehrere der Schüttgutbehälter nach einem der Ansprüche 1 bis 13 in Reihe geschaltet sind.
